# EUROPÄISCHE PATENTSCHRIFT

(11) **EP 4 536 589 B1**
(45) Veröffentlichungstag und Bekanntmachung des Hinweises auf die Patenterteilung: **05.11.2025**
(21) Anmeldenummer: 24758255.4
(22) Anmeldetag: 19.08.2024
(51) Int. Cl.: C01C 1/04, B01J 8/00, B01J 19/00

(54) **VERFAHREN ZUM BETREIBEN EINER AMMONIAKANLAGE BEIM AUSFALL EINER REGENERATIVEN ENERGIEQUELLE**
METHOD FOR OPERATING AN AMMONIA FACILITY WHEN A RENEWABLE ENERGY SOURCE FAILURE OCCURS
PROCÉDÉ DE FONCTIONNEMENT D'UNE INSTALLATION D'AMMONIAC LORSQU'UNE DÉFAILLANCE DE SOURCE D'ÉNERGIE RENOUVELABLE SE PRODUIT

(30) Priorität: 25.08.2023 DE 102023122858; 25.08.2023 LU 103189
(43) Veröffentlichungstag der Anmeldung: 16.04.2025
(73) Patentinhaber: thyssenkrupp Uhde GmbH, 44141 Dortmund (DE); thyssenkrupp AG, 45143 Essen (DE)
(72) Erfinder: GORVAL, Evgeni, 44135 Dortmund (DE); KEIL, Bernd, 44141 Dortmund (DE)
(74) Vertreter: thyssenkrupp Intellectual Property GmbH
(86) Internationale Anmeldenummer: PCT/EP2024/073161
(87) Internationale Veröffentlichungsnummer: WO 2025/045616

(56) Entgegenhaltungen:
- EP-A1- 4 186 853
- WO-A1-2021/089276
- WO-A1-2023/099743
- US-B2- 9 463 983

## Beschreibung

Die Erfindung betrifft ein Verfahren zum Betreiben einer Ammoniakanlage, welche zur Erzeugung von insbesondere grünem Ammoniak auf regenerative Energiequellen zurückgreift, bei Ausbleiben der regenerativen Energie.

Ammoniak wird seit Jahrzehnten überwiegend nach dem Haber-Bosch-Verfahren hergestellt. Hierzu wird in den meisten Fällen aus Erdgas zunächst Wasserstoff erzeugt und dieser mit Stickstoff unter hohem Druck und bei hoher Temperatur an einem Katalysator umgesetzt. Da es sich hierbei um eine Gleichgewichtsreaktion handelt, deren Gleichgewicht eben nicht auf die Seite der Produkte verschoben ist, wird in einem Rezirkulationskreis der Ammoniak abgetrennt und nicht umgesetzter Wasserstoff und Stickstoff erneut dem Katalysator zugeführt. Durch die Verwendung von Erdgas wird jedoch eine entsprechende Menge an Kohlendioxid erzeugt.

Um Ammoniak nachhaltig herzustellen wird daher heutzutage auf die Elektrolyse von Wasser mittels regenerativ erzeugter Energie gesetzt. Hierbei ergibt sich jedoch ein großer Unterschied zum bisherigen Prozess. Wird beispielsweise Solarstrom verwendet, ergibt sich aus dem Tag-Nacht-Zyklus ein Zeitraum, in dem keine regenerativ erzeugte Energie zur Verfügung steht. Beispielsweise durch die Kombination aus Solar und Windkraft lässt sich dieser Effekt etwas abmildern, das grundsätzliche Problem bleibt jedoch bestehen. Zwar kann in einigen Regionen theoretisch dann elektrische Energie aus dem allgemeinen Stromnetz bezogen werden, jedoch wird auch dieses zu diesen Zeiten nur schwer mit regenerativ erzeugter Energie zu versorgen sein. Des Weiteren sind auch Anlagen geplant, welche an zur Energieerzeugung günstigen Orten aufgestellt und keinen Zugang zu einem elektrischen Versorgungsnetz haben. Die Elektrolyse von Wasser zur Herstellung von Wasserstoff für eine Ammoniaksyntheseanlage ist beispielsweise aus US 9 463 983 B2 bekannt.

Ein Konverter für die Synthese von Ammoniaksynthese kann nicht einfach ab- und angeschaltet werden. Beispielsweise ist eine Temperatur von wenigstens 350 °C notwendig, damit die Reaktion am Katalysator stattfinden kann. Im laufenden Betrieb wird die notwendige Energie (zum Ausgleich thermischer Verluste) durch die bei der Reaktion freiwerdende Energie erzeugt.

Aus der DE 10 2022 204 103 sind daher Verfahren bekannt, um bei sinkender regenerativ erzeugter Energiemenge den Betrieb anzupassen und so mit einer geringeren Energiemenge auszukommen. Für den Fall eines längeren Ausbleibens der regenerativen Energie, beispielsweise bei einer länger anhaltenden Flaute wird ein sogenannter Hot Standby vorgenommen, bei dem alle Anlagenteile abgeschaltet werden und nur noch der Gaskreislauf des Konverters aufrecht erhalten wird und mittels einer elektrischen Heizung thermische Verluste ausgeglichen werden.

Gerade bei längeren Flauten, beispielsweise über drei Tage, sind die benötigten Energiemengen immer noch vergleichsweise groß, sodass die benötigte Speicherkapazität, beispielsweise an Akkumulatoren, immer noch groß ist.

Aufgabe der Erfindung ist es, den Energiebedarf bei einer vollständigen Abschaltung der Restanlage aber mit dem erleichterten Wiederanfahren des Konverters weiter zu reduzieren.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient dem Betreiben einer Ammoniaksyntheseanlage. Das erfindungsgemäße Verfahren erweitert das normale fachmännische Betreiben einer Ammoniaksyntheseanlage um einen Sonderfall, welcher sich insbesondere durch die vermehrte Verwendung regenerativ erzeugter Energie und der durch diese Energie meist elektrolytisch erzeugten Wasserstoff ergibt. Während bisher ein sehr konstanter Wasserstoffstrom einen kontinuierlichen Betrieb im Haber-Bosch-Verfahren ermöglicht hat, ist nun durch Schwankungen im Bereich der regenerativen Energien auch mit einer Schwankung der zur Verfügung gestellten Menge an Wasserstoff zu rechnen. Erschwerend kommt hinzu, dass gewisse Komponenten, beispielsweise die Kompressoren keine lineare Energieaufnahme zur Fördermenge aufweisen, sondern selbst bei 10 % Durchsatz noch etwa 85 % Energiebedarf haben. Gerade bei Windkraft können auch Flauten auftreten, die über längere Zeiten andauern. Ein vollständiges Abpuffern über Energiereicher ist nicht realistisch. Es werden daher die fachmännischen Verfahren zum Betrieb dahingehend modifiziert beziehungsweise erweitert, dass ein möglichst effizientes Wiederanfahren auch beispielsweise nach einer langen Flaute wieder möglich ist. Die Ammoniaksyntheseanlage weist einen Rezirkulationskreis auf. Der Rezirkulationskreis weist einen Konverter mit wenigstens einem ersten Katalysatorbett, einen ersten Wärmetauscher, einen zweiten Wärmetauscher, einen Ammoniakabscheider, einen Verdichter und eine Eduktzuführung auf. Dieses entspricht dem üblichen Aufbau einer Haber-Bosch- Anlage.

Erfindungsgemäß weist das Verfahren bei der Unterbrechung der Wasserstoffversorgung die folgenden Schritte auf:
a) Beenden der Gasströmung durch den Konverter,
b) Erfassen der Temperatur wenigstens des ersten Katalysatorbettes und gleichzeitig Empfangen einer Prognose zum Wiederbeginn der Wasserstoffversorgung.

Weist der Konverter mehrere Katalysatorbetten auf, so wird in Schritt b) die Temperatur in oder am Gasausgang jedes Katalysatorbettes erfasst.

Die Unterbrechung ist hier insbesondere und bevorzugt auf die Schwankung in der Erzeugung regenerativer Energie zurückzuführen. Eine Unterbrechung muss hierbei nicht vollständig sein. Je nach Anlage ist ein Weiterbetrieb oft unter 5 bis 15 % nicht mehr wirtschaftlich und/oder technisch sinnvoll, sodass ein Absinken unter die jeweilige Schwelle der Anlage als Unterbrechung im Sinne der Erfindung anzusehen ist.

Wesentlich ist hierbei, dass im Gegensatz zu allen bisherigen Verfahren der Konverter einfach nicht durchströmt wird. Jede weitere Durchströmung bewirkt eine noch schnelle Abkühlung, wie sich gezeigt hat. Durch das sofortige Beenden der Durchströmung reduziert somit die Abkühlung. Damit kann auf ein elektrisches Zuheizen (zusätzlich zum Verdichter) verzichtet werden, was wiederum massiv den Bedarf zur Speicherung von Energie und damit den Invest reduziert. Somit unterscheidet sich das Verfahren an diesem Punkt eben deutlich von bisherigen, beispielsweise und insbesondere von dem in der DE 10 2022 204 103 offenbarten Verfahren.

Die in Schritt b) erfassten Informationen werden zur Unterscheidung von Fällen verwendet:
I) ein Wiederbeginn der Wasserstoffversorgung ist innerhalb eines vorgegebenen Zeitraums zu erwarten,
II) ein Wiederbeginn der Wasserstoffversorgung ist nicht innerhalb eines vorgegebenen Zeitraums zu erwarten.

Der vorgegebene Zeitraum wird so gewählt, dass dieser für die gewählte Anlage geeignet ist, also insbesondere bezüglich Speicherkapazität zur Überbrückung der Nichterzeugung regenerativer Energie sowie Vorhersagesicherheit bezüglich der regenerativen Energieerzeugung. Ein beispielhafter, üblicher und vorteilhafter Zeitraum sind vier Stunden. Auf dieser Zeitskale sind präzise Wettervorhersagen möglich und somit auch die Vorhersage der erzeugten Menge an regenerativ erzeugter Energie. Gleichzeitig sind die für den Zeitraum von 4 h benötigten Energiemengen noch sehr gut speicherbar.

Aus diesen Fällen ergeben sich somit dann Unterfälle, aus denen sich die folgenden unterschiedlichen Handlungsschritte ergeben:
A) wenn in Fall I) die Temperatur des ersten Katalysatorbettes oberhalb von 350 °C liegt, Wiederanfahren der Gasströmung durch den Konverter zum Wiederbeginn der Wasserstoffversorgung,
B) wenn in Fall I) die Temperatur unterhalb von 350 °C liegt, Wiederanfahren der Gasströmung durch den Konverter und Zuheizen in der Gasströmung, sodass zum Zeitpunkt des Wiederbeginns der Wasserstoffversorgung die Temperatur oberhalb von 350 °C liegt,
C) wenn im Fall II) die Temperatur über einen Wert zwischen 150 °C und 200 °C liegt, nichts tun,
D) wenn im Fall II) die Temperatur auf einen Wert zwischen 150 °C und 200 °C absinkt, Wiederanfahren der Gasströmung durch den Konverter.

Es ergeben sich somit aus einem Entscheidungsbaum nach zwei mal zwei Auswahlmöglichkeiten somit letztendlich genau vier Handlungsschritte, von denen die Handlungsschritte A) und B) zum Fall I) und die Handlungsschritte C) und D) zum Fall II) gehören.

Bei dem Handlungsschritt A) ist ein Wiederhochfahren des Konverters unmittelbar möglich, da der Konverter noch eine ausreichend hohe Temperatur aufweist. Das Wiederhochfahren erfolgt natürlich erst zum Ende des vorgegebenen Zeitraums, wenn durch den Wiederbeginn der Wasserstoffversorgung ein Betrieb wieder möglich ist.

Dieses bedeutet, dass insbesondere im Falle einer solar betriebenen Energieerzeugung die Ausfallzeiten (Nacht) so kurz sind, dass diese meist unter den Handlungsschritt A) fallen. Somit kann in einem solchen Fall die Energiespeicherkapazität minimal gehalten werden. Dieses gilt umso geringer die jahreszeitlichen Schwankungen im solar produzierten Strom liegen.

Bei dem Handlungsschritt B) ist vor dem erneuten Anfahren des Konverters dieser zu erwärmen. Üblicherweise werden solche Anlagen mit einer Heizrate von 50 °C erwärmt. Die übliche Zeit für die Wettervorhersage liegt bei 4 h für zuverlässige Prognosen, sodass mit einem Energiespeicher für den Verdichter und den Heizer auf vier Stunden ausgelegt werden kann. In dieser Zeit ist ein Hochfahren von 150 °C auf 350 °C möglich. Läge die Temperatur aber bei 300 °C, so müsste erst eine Stunde vor dem Wiederbeginn der Wasserstoffversorgung und somit vor Ende des vorgegebenen Zeitraums mit dem Heizen begonnen werden. Es wird also so spät wie möglich mit dem Heizen begonnen, aber so, dass zum Zeitpunkt des Wiederbeginns der Wasserstoffversorgung die Temperatur oberhalb von 350 °C liegt.

Bei Handlungsschritt A) und B) kann natürlich eine Anpassung des Zeitpunkts des Wiederbeginns der Wasserstoffversorgung erfolgen, wenn diese gegenüber der Vorhersage früher oder später zur Verfügung steht. In diesem Fall wird vorzugsweise eine entsprechende Anpassung vorgenommen.

Bei dem Handlungsschritt C) ist ein erneutes Anfahren noch nicht innerhalb des Vorhersagezeitraums zu erwarten. Der Konverter ist jedoch noch heiß genug, sodass man einfach den Konverter geschlossen hält, um die Abkühlung zu minimieren. Damit wird keine Energie benötigt und somit auch kein Energiespeicher. Bei herkömmlichen Anlagen ist auf diese Weise und ohne die Aufwendung zusätzlicher Energie ein Zeitraum von beispielsweise ungefähr 3 Tagen möglich. Somit kann nur mit einem kleinen Energiespeicher für das Wiederanfahren nach Handlungsschritt B) ein vergleichsweise langer Zeitraum überbrückt werden. Das nichts tun bezieht sich in diesem Zusammenhang darauf, dass keine Energie zum Aufheizen gezielt in den Konverter eingebracht wird. Es wird also die natürliche Auskühlung abgewartet.

Bei dem Handlungsschritt D) wird ein Zeitraum überbrückt, der noch länger als der Zeitraum nach Handlungsschritt C) ist. Fällt die Temperatur unter einen vorgegebenen Wert aus dem Fenster 150 °C bis 200 °C, also beispielsweise einen vorgegebenen Wert von 170 °C, so wird der Gaskreislauf wieder geöffnet, jedoch nur der Verdichter betrieben, also kein elektrischer Heizer zusätzlich. Es wird also lediglich Energie über den Vorgang des Verdichtens in den Prozess eingebracht. Hierdurch kann die Temperatur auf den vorgegebenen Wert (der natürlich von exakten Anlagendesign und den Umgebungsbedingungen abhängig ist), stabilisiert werden. Somit wird gegenüber dem herkömmlichen Verfahren die elektrische Energie für den elektrischen Heizer eingespart. Dadurch kann der elektrische Speicher auch für längere Ausfälle kleiner dimensioniert werden. Durch das Halten auf diesem vergleichsweise geringen Temperaturniveau wird natürlich die Abstrahlung und damit der Wärmeverlust und damit die einzubringende Energiemenge reduziert. Zeitgleich sind Temperaturen von 200 °C und weniger für den Verdichter unproblematisch, sodass zum Beispiel die Wärmetauscher über Bypassverbindungen überbrückt werden können und so die Wärmeverluste aus dem Rezirkulationskreis minimal gehalten werden können. Bevorzugt wird entsprechend während des Handlungsschritts D) der erste Wärmetauscher mit einer ersten Wärmetauscher-Bypassverbindung überbrückt. Optional kann zusätzlich auch der zweite Wärmetauscher mit einer zweiten Wärmetauscher-Bypassverbindung überbrückt, wodurch insbesondere der Strömungswiderstand im Rezirkulationskreislauf reduziert werden kann.

In einer weiteren Ausführungsform der Erfindung wird bei der Fallunterscheidung der Wiederbeginn der Wasserstoffversorgung über die Wettervorhersage zur Vorhersage von regenerativ erzeugten Strom abgeschätzt. Während gerade bei Sonne der tageszeitliche Verlauf sicher vorhersagbar ist, stellt hier die Bewölkung einen entscheidenden Faktor dar. Für die Windkraft hingegen können gerade auch länger anhaltende Flauten ein Problempunkt sein. Für Anlagen zur Erzeugung regenerativer Energie wird jedoch üblicherweise aus historischen Daten eine zuverlässige Prognose über die Häufigkeit und Länge der zu erwartenden Produktionsausfälle erstellt, sodass der Energiespeicher zur Überbrückung dieser Zeiten ausgelegt werden kann. Die erfindungsgemäße Lehre dient eben gerade dazu, einen solchen Speicher möglichst klein ausbilden zu können.

In einer weiteren Ausführungsform der Erfindung wird als Vorhersagezeitraum für den Wiederbeginn der Wasserstoffversorgung 2 bis 8 h, bevorzugt 4 h, verwendet. Dieser Zeitraum verbindet zum einen die Möglichkeit einer zuverlässigen Wetterprognose für die Erzeugung regenerativer Energien mit dem Zeitfenster, welches zum erneuten Aufheizen des Konverters nötig ist.

In einer weiteren Ausführungsform der Erfindung erfolgt das Beenden der Durchströmung in Schritt a) durch Schließen von Schnellschlussventilen. Bei den bisherigen Verfahren wird der Gasstrom aufrecht erhalten und durch eine elektrische Heizung auf Temperaturniveau gehalten. Das Verschließen verringert aber den Wärmeverlust und führt zu einer massiven Verringerung des Energiebedarfs gerade bei längeren Unterbrechungen.

In einer weiteren Ausführungsform der Erfindung wird bei einem Konverter mit mindestens zwei Katalysatorbetten die Temperatur in oder nach jedem Katalysatorbett gemessen. Zur Auswahl der Handlungsschritte wird die niedrigste gemessene Temperatur verwendet. Während im Volllastbetrieb die Temperatur nach dem ersten Katalysatorbett am höchsten ist und beispielsweise 500 °C erreichen kann, während nach dem dritten Katalysatorbett nur noch eine Temperatur von etwa 440 °C erreicht wird, kann sich dieses Verhältnis bei sehr geringer Auslastung (aktueller Umsatz bezogen auf maximal möglichen Umsatz) von beispielsweise 10 % sogar umkehren kann, sodass beispielsweise nach dem ersten Katalysatorbett eine Temperatur von 380 °C und nach dem dritten Katalysatorbett von 400 °C erreicht wird. Daher ist es sinnvoll nach jedem Katalysatorbett zu messen.

In einer weiteren Ausführungsform der Erfindung wird im Fall I) aus der gemessenen Temperatur und aus dem zu erwartenden Zeitpunkt des Wiederbeginns der Wasserstoffversorgung eine optionale Wartezeit bis zum Beginn der Handlungsschrittes A) oder B) bestimmt. Dieses ist vorteilhaft und bevorzugt, wenn absehbar ist, dass beispielsweise 4 h vor der Wiederaufnahme des Betriebs die Temperatur oberhalb von 350 °C liegt, also theoretisch kein Vorheizen benötigt wird, in den vier Stunden die Temperatur aber durch die weitere Abkühlung unter die 350 °C fallen wird. In diesem Fall ist so spät wie möglich und so früh wie nötig dennoch mit Handlungsschritt B) zu beginnen, um rechtzeitig sicher über 350 °C zu liegen.

In einer weiteren Ausführungsform der Erfindung wird für die Handlungsschritte C) und D) eine Temperatur von einem Wert zwischen 165 °C und 175 °C, bevorzugt von 170 °C, gewählt.

Natürlich ist das erfindungsgemäße Verfahren nicht nur auf den vorbeschriebenen Fall einer schwankenden Betriebsweise bei der Herstellung von Wasserstoff mittels regenerativ erzeugter elektrischer Energie beschränkt, auch wenn dieses als der wahrscheinlichste Anwendungsfall anzusehen ist. Das Verfahren kann auch angewendet werden, wenn beispielsweise aufgrund eines Notfallplanes Gas die Belieferung mit Gas zeitweise eingestellt wird, oder ein den Wasserstoff erzeugender Dampfreformer ausfällt, gewartet oder repariert werden muss. Auch in diesen Fällen kann dann, sobald der Wasserstoff wieder zur Verfügung steht, in analoger Weise wieder schneller der Betrieb aufgenommen werden und die für die Zwischenzeit benötigte Energie reduziert werden.

Nachfolgend ist das erfindungsgemäße Verfahren anhand eines in der Zeichnung dargestellten Ausführungsbeispiels näher erläutert.

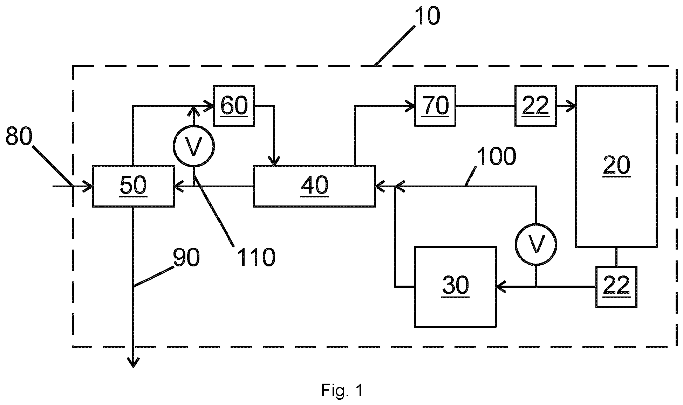

Fig. 1 erstes Ausführungsbeispiel

In Fig. 1 ist der Rezirkulationskreis 10 schematisch vereinfacht dargestellt. Über die Eduktzuführung 80 wird ein Wasserstoff-Stickstoff-Gemisch dem Rezirkulationskreis 10 zur Umsetzung zugeführt, wobei dieser Strom einer starken Schwankung unterliegt und zwischen 100 % (Maximallast) und 0 % (Standby) schwanken kann. Der Gasstrom wird durch den Verdichter 60 und den zweiten Wärmetauscher 40 dem Konverter 20 zugeführt. Das den Konverter 20 verlassende Gasgemisch wird im Regelbetrieb über den ersten Wärmetauscher 30 zur Abführung der Reaktionswärme und den zweiten Wärmetauscher 40 in den Ammoniakabscheider 50 geführt. Dort wird das Ammoniak abgetrennt und durch die Produktabgabe 90 aus dem Kreis entfernt.

Fällt nun die Bereitstellung von durch regenerative Energie erzeuget Wasserstoffmenge länger, also wenigstens für mehrere Stunden, unter eine Schwelle, beispielsweise 10 %, ist es effizienter, die Anlage in den Standby zu versetzen. Dazu werden die Schnellschlussventile 22 geschlossen und alle Anlagenteile abgeschaltet. Der Konverter 20 kühlt nun langsam ab und erreicht beispielsweise nach 1,5 Tagen eine Temperatur von 350 °C. Bis dahin könnte man die Anlage jederzeit und ohne Verzögerung wieder anfahren.

Wenn die Prognose dann immer noch keine Änderung anzeigt, ändert man nichts und lässt den Konverter weiter abkühlen, bis beispielsweise auf eine Temperatur von 170 °C. In diesem Fall werden die Ventile V geöffnet, sodass der erste Wärmetauscher 30 über die erste-Wärmetauscher-Bypassverbindung 100, der Ammoniakabscheider 50 über die Ammoniakabscheider-Bypassverbindung 110. Der Verdichter 60 wird eingeschaltet und durch die eingebrachte Energie des Verdichters 60 wird die Temperatur auf 170 °C stabilisiert.

Wenn nun die Prognose ein erneutes Hochfahren in 4 h anzeigt, wird das Heizelement 70 zugeschaltet und der Konverter mit 50 °C pro Stunde aufgeheizt. Am Ende hat der Konverter 370 °C, wenn wieder Wasserstoff für die Synthese zur Verfügung steht und die Ammoniaksynthese kann gemäß dem Stand der Technik wieder aufgenommen werden.

### Bezugszeichen

- 10: Rezirkulationskreis
- 20: Konverter
- 22: Schnellschlussventil
- 30: erster Wärmetauscher
- 40: zweiter Wärmetauscher
- 50: Ammoniakabscheider
- 60: Verdichter
- 70: Heizelement
- 80: Eduktzuführung
- 90: Produktabgabe
- 100: erster-Wärmetauscher-Bypassverbindung
- 110: Ammoniakabscheider-Bypassverbindung
- V: Ventil

## Patentansprüche

1. Verfahren zum Betreiben einer Ammoniaksyntheseanlage, wobei die Ammoniaksyntheseanlage einen Rezirkulationskreis (10) aufweist, wobei der Rezirkulationskreis (10) einen Konverter (20) mit wenigstens einem ersten Katalysatorbett, einen ersten Wärmetauscher (30), einen zweiten Wärmetauscher (40), einen Ammoniakabscheider (50), einen Verdichter (60) und eine Eduktzuführung (80) aufweist, **dadurch gekennzeichnet, dass** das Verfahren bei der Unterbrechung der Wasserstoffversorgung die folgenden Schritte aufweist:
a) Beenden der Gasströmung durch den Konverter (20),
b) Erfassen der Temperatur wenigstens des ersten Katalysatorbettes und gleichzeitig Empfangen einer Prognose zum Wiederbeginn der Wasserstoffversorgung,
wobei die in Schritt b) erfassten Informationen zur Unterscheidung von Fällen verwendet werden:
I) ein Wiederbeginn der Wasserstoffversorgung ist innerhalb eines vorgegebenen Zeitraums zu erwarten ist,
II) ein Wiederbeginn der Wasserstoffversorgung ist nicht innerhalb eines vorgegebenen Zeitraums zu erwarten ist,
wobei sich aus den unterschiedlichen Fällen die folgenden Handlungsschritte ergeben:
A) wenn in Fall I) die Temperatur des ersten Katalysatorterbettes oberhalb von 350 °C liegt, Wiederanfahren der Gasströmung durch den Konverter (20) zum Wiederbeginn der Wasserstoffversorgung,
B) wenn in Fall I) die Temperatur unterhalb von 350 °C liegt, Wiederanfahren der Gasströmung durch den Konverter (20) und Zuheizen in der Gasströmung, sodass zum Zeitpunkt des Wiederbeginns der Wasserstoffversorgung die Temperatur oberhalb von 350 °C liegt,
C) wenn im Fall II) die Temperatur über einen Wert zwischen 150 °C und 200 °C liegt, nichts tun,
D) wenn im Fall II) die Temperatur auf einen Wert zwischen 150 °C und 200 °C absinkt, Wiederanfahren der Gasströmung durch den Konverter (20).

2. Verfahren nach Anspruch 1, **dadurch gekennzeichnet, dass** bei der Fallunterscheidung der Wiederbeginn der Wasserstoffversorgung über die Wettervorhersage zur Vorhersage von regenerativ erzeugtem Strom abgeschätzt wird.

3. Verfahren nach Anspruch 2, **dadurch gekennzeichnet, dass** als Vorhersagezeitraum für den Wiederbeginn der Wasserstoffversorgung 2 bis 8 h, bevorzugt 4 h, verwendet wird.

4. Verfahren nach einem der vorstehenden Ansprüche, **dadurch gekennzeichnet, dass** das Beenden der Durchströmung in Schritt a) durch Schließen von Schnellschlussventilen erfolgt.

5. Verfahren nach einem der vorstehenden Ansprüche, **dadurch gekennzeichnet, dass** bei einem Konverter (20) mit mindestens zwei Katalysatorbetten die Temperatur in oder nach jedem Katalysatorbett gemessen wird, wobei zur Auswahl der Handlungsschritte die niedrigste gemessene Temperatur verwendet wird.

6. Verfahren nach einem der vorstehenden Ansprüche, **dadurch gekennzeichnet, dass** im Fall I) aus der gemessenen Temperatur und aus dem zu erwartenden Zeitpunkt des Wiederbeginns der Wasserstoffversorgung eine optionale Wartezeit bis zum Beginn der Handlungsschrittes A) oder B) bestimmt wird.

7. Verfahren nach einem der vorstehenden Ansprüche, **dadurch gekennzeichnet, dass** für die Handlungsschritte C) und D) eine Temperatur von einem Wert zwischen 165 °C und 175 °C, bevorzugt von 170 °C, gewählt wird.

## Claims

1. A method of operating an ammonia synthesis plant, the ammonia synthesis plant comprising a recirculation circuit (10), the recirculation circuit (10) comprising a converter (20) having at least a first catalyst bed, a first heat exchanger (30), a second heat exchanger (40), an ammonia separator (50), a compressor (60) and an educt feed (80), **characterised in that** the method comprises the following steps upon interruption of the hydrogen supply:
a) Terminating the gas flow through the converter (20),
b) detecting the temperature of at least the first catalyst bed and simultaneously receiving a forecast for restarting the hydrogen supply,
wherein the information collected in step b) is used to distinguish cases:
I) a restart of the hydrogen supply is to be expected within a predetermined period of time,
II) a restart of the hydrogen supply is not to be expected within a specified period of time,
whereby the following action steps result from the different cases:
A) if in case I) the temperature of the first catalyst bed is above 350 °C, restarting the gas flow through the converter (20) to restart the hydrogen supply,
B) if in case I) the temperature is below 350 °C, restarting the gas flow through the converter (20) and additional heating in the gas flow, so that the temperature is above 350 °C at the time of restarting the hydrogen supply,
C) if in case II) the temperature is above a value between 150 °C and 200 °C, do nothing,
D) if in case II) the temperature falls to a value between 150 °C and 200 °C, restarting the gas flow through the converter (20).

2. Method according to claim 1, **characterised in that,** in the case differentiation, the restart of the hydrogen supply is estimated using the weather forecast to predict regeneratively generated electricity.

3. Method according to claim 2, **characterised in that** 2 to 8 h, preferably 4 h, is used as the prediction period for the restart of the hydrogen supply.

4. Method according to one of the preceding claims, **characterised in that** the flow is terminated in step a) by closing quick-closing valves.

5. Method according to one of the preceding claims, **characterised in that,** in a converter (20) with at least two catalyst beds, the temperature is measured in or after each catalyst bed, the lowest measured temperature being used to select the action steps.

6. Method according to one of the preceding claims, **characterised in that** in case I) an optional waiting time until the start of action step A) or B) is determined from the measured temperature and from the expected time of the restart of the hydrogen supply.

7. Method according to one of the preceding claims, **characterised in that** a temperature of a value between 165 °C and 175 °C, preferably 170 °C, is selected for steps C) and D).

## Revendications

1. Procédé d'exploitation d'une usine de synthèse d'ammoniac, l'usine de synthèse d'ammoniac comprenant un circuit de recirculation (10), le circuit de recirculation (10) comprenant un convertisseur (20) ayant au moins un premier lit catalytique, un premier échangeur de chaleur (30), un deuxième échangeur de chaleur (40), un séparateur d'ammoniac (50), un compresseur (60) et une alimentation en réducteur (80), **caractérisé en ce que** le procédé comprend les étapes suivantes lors de l'interruption de l'alimentation en hydrogène :
a) l'arrêt du flux de gaz à travers le convertisseur (20),
b) détecter la température d'au moins le premier lit catalytique et recevoir simultanément une prévision de redémarrage de l'alimentation en hydrogène,
dans lequel les informations recueillies à l'étape b) sont utilisées pour distinguer les cas suivants :
I) un redémarrage de l'alimentation en hydrogène est à prévoir dans un délai prédéterminé,
II) aucun redémarrage de l'alimentation en hydrogène n'est à prévoir dans un délai spécifié,
les mesures suivantes résultant des différents cas :
A) si, dans le cas I), la température du premier lit catalytique est supérieure à 350 °C, redémarrer le flux de gaz à travers le convertisseur (20) pour redémarrer l'alimentation en hydrogène,
B) si, dans le cas I), la température est inférieure à 350 °C, redémarrer le flux de gaz à travers le convertisseur (20) et chauffer davantage le flux de gaz, afin que la température soit supérieure à 350 °C au moment du redémarrage de l'alimentation en hydrogène,
C) si dans le cas II) la température est supérieure à une valeur comprise entre 150 °C et 200 °C, ne rien faire,
D) si, dans le cas II), la température chute à une valeur comprise entre 150 °C et 200 °C, redémarrer le flux de gaz à travers le convertisseur (20).

2. Procédé selon la revendication 1, **caractérisé en ce que,** dans la différenciation des cas, le redémarrage de l'alimentation en hydrogène est estimé à l'aide des prévisions météorologiques afin de prédire l'électricité produite de manière régénérative.

3. Procédé selon la revendication 2, **caractérisé en ce que** 2 à 8 h, de préférence 4 h, sont utilisées comme période de prévision pour la reprise de l'alimentation en hydrogène.

4. Procédé selon l'une des revendications précédentes, **caractérisé en ce que** le flux est interrompu à l'étape a) en fermant des vannes à fermeture rapide.

5. Procédé selon l'une des revendications précédentes, **caractérisé en ce que,** dans un convertisseur (20) comportant au moins deux lits catalytiques, la température est mesurée dans ou après chaque lit catalytique, la température mesurée la plus basse étant utilisée pour sélectionner les étapes d'action.

6. Procédé selon l'une des revendications précédentes, **caractérisé en ce que** dans le cas I), un temps d'attente optionnel jusqu'au début de l'étape d'action A) ou B) est déterminé à partir de la température mesurée et du moment prévu pour la reprise de l'alimentation en hydrogène.

7. Procédé selon l'une des revendications précédentes, **caractérisé en ce qu'**une température comprise entre 165 °C et 175 °C, de préférence 170 °C, est sélectionnée pour les étapes C) et D).
